# EUROPEAN PATENT APPLICATION

(11) **EP 4 589 412 A1**
(43) Date of publication of application: **23.07.2025**
(21) Application number: 25150886.7
(22) Date of filing: 09.01.2025
(51) Int. Cl.: G06F 3/01, G06V 20/20

(54) **METHOD AND SYSTEM FOR TRIGGERING AN INTELLIGENT DIALOGUE THROUGH AN AUGMENTED-REALITY IMAGE**

(30) Priority: 16.01.2024 TW 113101611
(71) Applicant: Playsee Inc., KY1 -1208 West Bay Grand Cayman (KY)
(72) Inventor: YU-HSIEN, Li, 116 TAIPEI CITY (TW); CHEN-CHOU, Lin, Taipei (TW); HEN-SHAU, Lee Max, 115603 Taipei City (TW)
(74) Representative: Durán-Corretjer, S.L.P.

(57) **Abstract**

A method and a system for triggering an intelligent dialogue through an augmented-reality image. A server receives location information and a reality image request sent by a user device (150), calculates, based on the location information, visual ranges corresponding to viewing angles for the location information, queries a database based on the calculated multiple visual ranges to obtain location-based data, and sends link information of the location-based data within each of the visual ranges to the user device (150). One of the visual ranges is displayed in a reality image interface (115). The user device (150) marks one or more link icons linking the one or more pieces of location-based data, and provides an intelligent dialogue link point. When a user triggers the intelligent dialogue link point to generate an intelligent dialogue request, an intelligent dialogue program is started and a chatbot is introduced to generate a dialogue content (1001).

## Description

### FIELD OF THE INVENTION

The present invention relates to a method of starting an intelligent dialogue in a browsing interface, and more particularly to method and system for triggering an intelligent dialogue through an augmented-reality image that provide a service for starting an intelligent dialogue when the user uses the augmented-reality image to browse the surrounding environment.

### BACKGROUND OF THE INVENTION

ChatGPT is trained by learning a large amount of online messages and can respond to a user in natural language. However, common responses from ChatGPT to the user are standard answers obtained through learning and cannot be adapted in real-time to provide answers relevant to the current status of the user. Therefore, although ChatGPT is a natural language chatbot, it lacks in contents that are relevant to the user and consistent with real-time scenarios.

In addition to the above disadvantages, the services provided by current natural language chatbots are only for general discussions and cannot meet all needs. For example, because the application is not integrated with the actual environment, effective responses cannot be provided based on a current scenario of the user.

### SUMMARY OF THE INVENTION

In order to provide a novel way of triggering an intelligent dialogue, the present invention provides a method and a system for triggering an intelligent dialogue through an augmented-reality image. The system includes a server and a database. The server allows a user device to connect to the server and obtain link icons and relevant information having location-based data in the reality image, and provides a link in the reality image for triggering the intelligent dialogue.

In the method for triggering an intelligent dialogue through an augmented-reality image, after location information and a reality image request sent by the user device are received, multiple visual ranges corresponding to multiple viewing angles for the location information are calculated based on the location information, and a database based on the reality image request and the calculated multiple visual ranges is queried to obtain one or more pieces of location-based data.

After sending link information of the one or more pieces of location-based data within each of the multiple visual ranges to the user device, the user device initiates a reality image interface, marks one or more link icons linking the one or more pieces of location-based data in the reality image interface based on respective spatial locations of the one or more pieces of location-based data within each of the multiple visual ranges, and provides an intelligent dialogue link point.

When a user clicks the intelligent dialogue link point, an intelligent dialogue request is generated to start an intelligent dialogue program between the server and the user device. A chatbot is introduced, the location information and the one or more location-based data within each of the multiple visual ranges are obtained at the same time, and an intelligent dialogue interface is started in the user device for dialogue.

These and other aspects of the present invention will become apparent from the following description of the embodiment taken in conjunction with the following drawings and their captions, although variations and modifications therein may be affected without departing from the spirit and scope of the novel concepts of the invention.

### BRIEF DESCRIPTION OF THE DRAWINGS

The described embodiments may be better understood by reference to the following description and the accompanying drawings, in which:
FIG. 1 is a structural diagram of a system for triggering an intelligent dialogue through an augmented-reality image;
FIG. 2 is a data structural diagram for running a natural language model in the system for triggering an intelligent dialogue through an augmented-reality image;
FIG. 3 is a flowchart of a method for triggering an intelligent dialogue through an augmented-reality image according to one embodiment;
FIG. 4 is a flowchart of the method for triggering an intelligent dialogue through an augmented-reality image according to one embodiment in another scenario;
FIG. 5 is a flowchart of one embodiment of natural language message processing;
FIG. 6 is another flowchart of one embodiment of natural language message processing;
FIG. 7 is a schematic diagram of the reality image interface;
FIG. 8 is a schematic diagram of an augmented-reality interface embodiment;
FIG. 9 is another schematic diagram of the augmented-reality interface embodiment; and
FIGS. 10 to 12 are schematic diagrams of graphical user interfaces for running an intelligent dialogue program.

### DETAILED DESCRIPTION OF THE EXEMPLARY EMBODIMENTS

The present invention is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a," "an" and "the" includes plural reference, and the meaning of "in" includes "in" and "on." Titles or subtitles can be used herein for the convenience of a reader, which shall have no influence on the scope of the present invention.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present invention or of any exemplified term. Likewise, the present invention is not limited to various embodiments given herein. Numbering terms such as "first," "second" or "third" can be used to describe various components, signals or the like, which are for distinguishing one component/signal from another one only, and are not intended to, nor should be construed to impose any substantive limitations on the components, signals or the like.

The present invention provides a method and a system for triggering an intelligent dialogue through an augmented-reality image. A user device is used to turn on the camera function and activate a reality image interface that can capture and display a current environment image. According to location information sent to a server, corresponding location-based data can be obtained from the server, and link icons of contents are marked on the reality image interface based on spatial locations associated with the location-based data. In one embodiment, a reality image captured by the camera within a visual range is displayed in the reality image interface, such as a surrounding environment image that is combined with one or more link icons marked at one or more spatial locations to form an augmented-reality image. In this way, when the user operates the user device to see the environment image from a display, they can also see the link icon and certain text information marked on a spatial coordinate through the augmented-reality (AR) technology. Particularly, a link point is added to allow the user to start an intelligent dialogue program by a clicking, thereby achieving the purpose of the method for triggering an intelligent dialogue through an augmented-reality image.

According to one embodiment, the system for triggering an intelligent dialogue through an augmented-reality image can provide social media services through the Internet and a cloud server, thereby allowing users to join a social media and share texts, pictures, and audio-visual contents. In this way, the location-based data that can be obtained in the reality image includes the texts, pictures, and audio-visual contents shared by the users. Furthermore, the cloud server also provides chatbots in their respective fields that can provide dialogues to users through the services provided by the cloud server. Here, artificial intelligence technologies are used, including chatbots learning and trained on data in various fields using machine learning algorithms and natural language processing (NLP) technology to provide dialogue services. By learning user activities in the social media to derive user interests, the chatbot can provide dialogue contents that better match personal needs of the user and current environment characteristics based on semantic meanings of the user dialogue, the user interests, and environment information obtained in real-time.

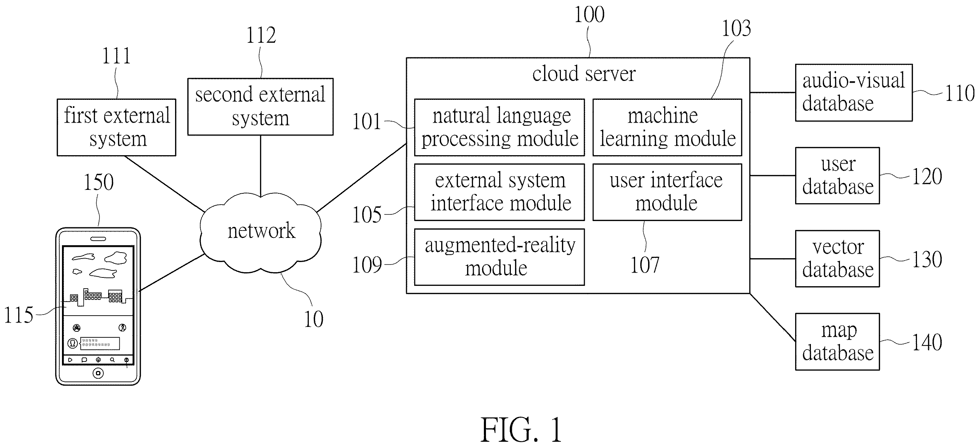

FIG. 1 is a structural diagram of a system for triggering an intelligent dialogue through an augmented-reality image. The system structure shown in the figure mainly includes a system for triggering an intelligent dialogue through an augmented-reality image implemented by a server, a database and related software and hardware at a server end, and an application program provided for execution by devices at a user end.

FIG. 1 shows a cloud server 100 implemented by a computer system, a database, and a network, and various functional modules are implemented through the cooperation of software and hardware. As shown in the figure, a natural language processing module 101 is used to process natural language information, and the natural language processing module 101 implements a chatbot having natural language processing capabilities. A machine learning module 103 runs a machine learning algorithm. In addition to training the natural language model, the machine learning module 103 can also learn user behaviors on the Internet through deep learning, so as to obtain user preference information for the chatbot to provide a dialogue content that matches the user interests; the cloud server 100 provides an external system interface module 105 that runs circuits and related application software that are connected (such as through a network 10) with external systems (such as a first external system 111 and a second external system 112) and obtains data through an application programming interface (API); the cloud server 100 provides a user interface module 107, and through a network connection function of the user interface module 107, a user device 150 can be connected to the cloud server 100 and run a server (web server) that provides network services, such that an application program running the corresponding service in the user device 150 can obtain the services provided by the cloud server 100.

According to one embodiment, the cloud server 100 uses an augmented-reality (AR) technology to implement an augmented-reality module 109 that can respond to a reality image request generated by the user device 150 and allow the user to view a nearby environment image through a display when the user starts the augmented-reality program. At the same time, the user can view objects in the augmented-reality provided by the cloud server 100 combined in the augmented-reality image. For example, when a reality image interface 115 is started in the user device 150, through the operation of the augmented-reality module 109 of the cloud server 100, link icons of location-based data marked in one or more spatial locations within the visual range and corresponding information are obtained. For example, when the user activates the camera of the user device 150 to obtain and display a surrounding environment image, current location information of the user device 150 is also sent to the cloud server 100, such that the software program in the cloud server 100 can determine a user location as well as surrounding environment objects that can be seen from the space of the user, such as buildings, roads, and sceneries. By querying the database, the location-based data associated with these environment objects can be obtained, thereby allowing the user device 150 to combine the location-based data into the augmented-reality image through the reality image interface 115, and link icons corresponding to each piece of the location-based data are displayed at corresponding spatial coordinates.

According to the structure shown in the figure, the cloud server 100 includes a built-in database or is externally connected to a database that provides data services through the cloud server 100. An audio-visual database 110 shown in the figure allows the user device 150 to access, through the network 10, audio-visual contents stored in the audio-visual database 110 and uploaded and shared by other users at each end of the system, and the video and audio content can include texts and images. A user database 120 stores user data, including user personal information, texts, images, and audio-visual contents that are uploaded, and obtains user activity data in the network service provided by the cloud server 100, such as browsing content, following, liking, sharing, and subscribing, so as to form a user profile accordingly. Furthermore, when the dialogue content continues to be generated over time, the user database 120 can store and update user data along the progression of time, including recording a historical dialogue record of the user that is used as a dialogue record for learning by machine learning algorithms in natural language models; a vector database 130 records structured information of various texts, pictures, and audio-visual contents that have undergone vectorization calculations, and can be used to compare various data that match user personalization.

The database may further include a map database 140. The map database 140 is used to allow users to query location-based data associated with a specific geographic location or spatial coordinates, for example, a country, an administrative region, a scenic spot, a landmark, and a user-marked location associated with a specific geographic location. In particular, in addition to the data on a planar geographical location, the location-based data having spatial coordinates can also be recorded. For example, if a restaurant is located on a certain floor in a building, a geographical location (such as latitude and longitude) and spatial coordinates with height information will be assigned to the restaurant, such as a spherical coordinate system described by a radial distance (γ), a polar angle (θ), and an azimuth angle (φ) or a rectangular coordinate system described by X, Y, and Z axes. Furthermore, since the map database 140 can query environment objects having height information, the system can determine the environment objects that the user can see through the user device 150 to form a visual range of the user based on the height information (such as an altitude) and a shooting direction of the user device 150 (a combination of an azimuth angle and a polar angle).

According to the schematic view of the structure of the system, the cloud server 100 can further obtain the data from external systems through the network 10 or connections of specific protocols, such as from the first external system 111 and the second external system 112 schematically shown in the figure. The external systems can be, for example, servers set up by governments or enterprises to provide open data. Accordingly, the cloud server 100 can obtain on-demand and real-time information such as real-time weather, real-time traffic conditions, real-time news, and real-time location-related network information through the external system interface module 105 via the application programming interface provided by the external system.

The user device 150 executes an application that can obtain services provided by the cloud server 100. For example, the cloud server 100 provides social media services, and the user device 150 executes a corresponding social media application, and obtains the social media services through the user interface module 107. In particular, the cloud server 100 provides a natural language chatbot through the natural language processing module 101, such that the user can conduct dialogue with the chatbot through the intelligent dialogue interface started in the reality image interface 115. On the other hand, the cloud server 100 can learn the activity data of the user using various services of the cloud server 100 through the machine learning module 103, including obtaining activity data of the user using the social media application and the reality image interface 115, such that the machine learning module 103 can learn interest characteristics of the user and create user profiles.

It should be noted that the various texts, pictures, and audio-visual contents obtained by the cloud server 100 are unstructured information and can be converted into vectorized data through encoding to facilitate the acquisition of meanings of the data and facilitate data search. Furthermore, the vectorized data can be used to compare search keywords of the user, and a distance function is used to calculate a distance between the search keywords and the vectorized data in the database. The closer the distance is, the closer the data is, thereby allowing the user to search for data through the vector database 130.

According to the embodiment, the vector database 130 of the cloud server 100 can support multi-modal search services such as text and images, which provides structured information, such as various texts, and pictures and audio-visual contents that are texturized, and then the vectorized data is calculated by using vector algorithms. The resulting vectorized data can be used in search services and in natural language processing programs. The natural language processing programs use natural language models to map vectorized data into vector spaces. Taking the words input by the user as an example, a word vector is obtained after vector calculation is performed on the words.

According to the embodiment, the function of performing an intelligent dialogue in the method for triggering an intelligent dialogue through an augmented-reality image provided in the present invention is implemented as a chatbot running on the cloud server 100. The chatbot can conduct dialogue with the user in natural language, including text and voice. In addition to responding to messages input by the user, user data can also be obtained through the cloud server before the dialogue so as to derive the user personality and habits from the user data. In addition, real-time status can be obtained from the external systems (111, 112). For example, local weather and news are obtained based on the user location. Accordingly, the replied content can not only be based on the user interests, but also reflect the actual status.

Furthermore, trained chatbots in various fields can be set up in cloud servers that run the method for triggering an intelligent dialogue through an augmented-reality image. When the user expresses the need for further information during the dialogue, the chatbot of related fields (such as a chatbot for businesses/products/types of a restaurant, a food court, or a night market) can be introduced into the dialogue to allow chatbots in related fields to continue to conduct dialogue with the user in natural language, thereby providing more professional and accurate dialogue content.

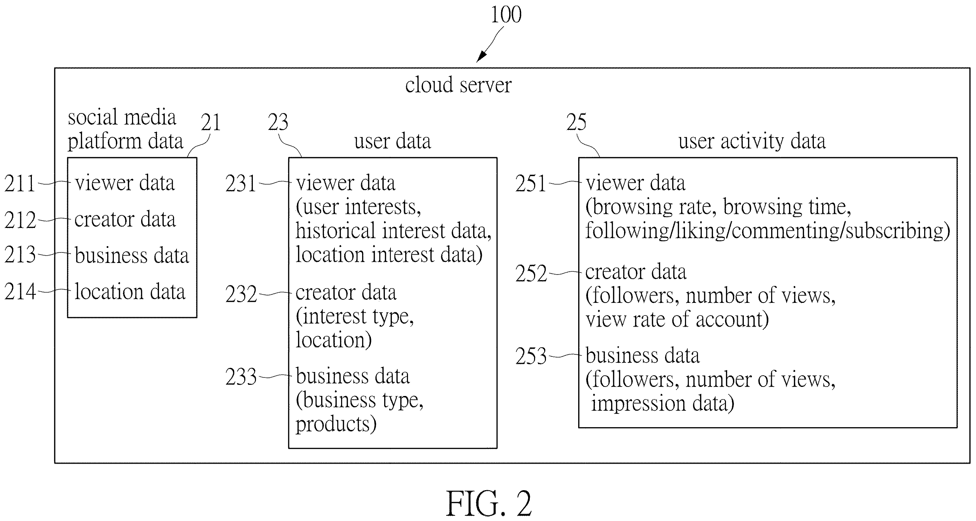

The system for triggering an intelligent dialogue through an augmented-reality image provides intelligent dialogue services through the reality image interface, uses machine learning manners to learn user interest data from dialogue history and the user activities on social media, and forms a structured data in the system. Reference is made to FIG. 2 for an example of a data structure of running a natural language model in a system for triggering an intelligent dialogue through an augmented-reality image. The data is divided into social media platform data 21, user data (such as a user profile) 23, and user activity data 25.

The social media platform data 21 is non-public data in the system, and the system for triggering an intelligent dialogue through an augmented-reality image obtains viewer data 211 of the user accessing various contents provided by the cloud server, creator data 212 of creators providing various contents in the system, and business data 213 provided by the system for enterprises to create enterprise information to facilitate advertising; further, because the system can provide location-based services, the system will obtain location data 214 related to various geographical locations.

The user data 23 is public data in the system, covering data edited by users themselves, and including viewer data 231 obtained by the system from various user activity data, which may include interest data obtained through machine learning with the user as the viewer. The interest data is such as recent interest data, historical interest data, and location-related interest data.

Creator data 232 in the user data 23 is the relevant information of the user as a creator, covering data related to interest type and location-related information of the creator learned by the system by performing machine learning. For example, the data may include data of the user as the creator, and the learned type and location of the creator interests, including geographical location or a specific location of a venue.

When the user is an enterprise, business data 233 in the user data 23 includes a business type and product characteristics of the enterprise obtained by the system through machine learning.

The user activity data 25 is non-public data in the system, includes statistical data on user activities in various services provided by the cloud server, and includes data obtained through machine learning, mainly including viewer data 251, creator data 252, and business data 253.

The viewer data 251 is the browsing rate, browsing time, and activity data such as following, liking, commenting, and subscribing when the user uses the services provided in the cloud server; the creator data 252 is statistical data, such as followers of a channel or an account, number of views of created content, and view rate of the account when the user is the creator; the business data 253 includes the followers, the number of content views, and overall impression data obtained when the user is an enterprise.

The above-mentioned social media platform data 21, the user data 23, and the user activity data 25 collected and learned by the cloud server are the basis for the dialogue service provided in the present invention using natural language processing and generative artificial intelligence technology. The cloud server performs calculations on the above-mentioned various data through processing circuits, thereby realizing a chatbot that meets personalized and real-time needs of the user.

According to one embodiment, the natural language model running in the cloud server can first perform a vector algorithm on the content input by the user through the dialogue interface, user interests, and real-time environment information, so as to mark the obtained text and calculate the vector of each of the words to obtain relevant content after querying the database based on vector distances between the words. Accordingly, dialogue content that matches the user interests and the real-time environment information is generated. In the process of online dialogue, a transformer model can be used to perform machine translation, document summarization, and document generation on the textualized data. Then, the semantic meaning in the dialogue of the user can be derived, such that the chatbot can generate the dialogue content.

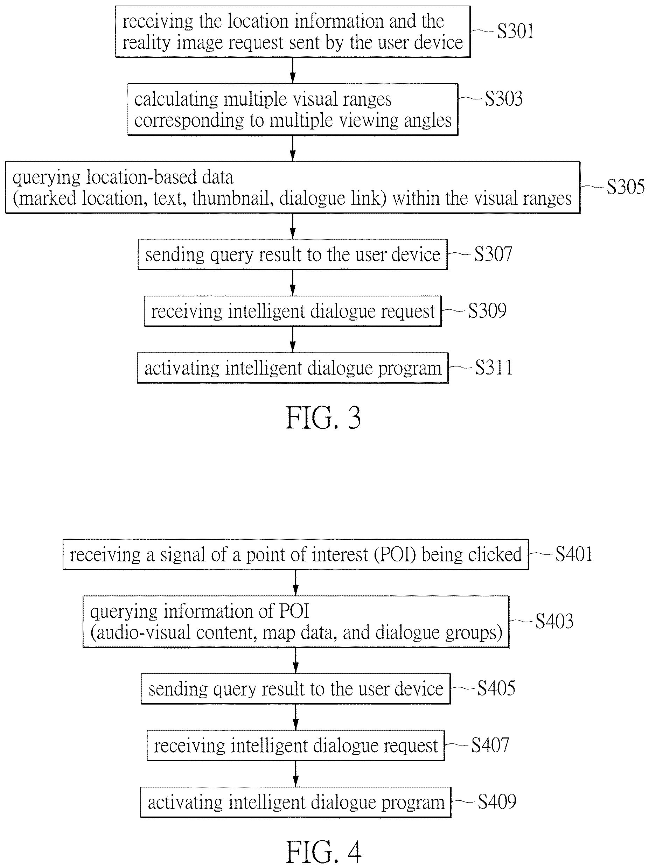

FIG. 3 is a flowchart of a method for triggering intelligent dialogue through an augmented-reality image according to one embodiment. The method for triggering intelligent dialogue through an augmented-reality image is executed in a server. The cloud server shown in FIG. 1 can provide an augmented-reality and an intelligent dialogue service through the network, such that user devices having corresponding applications installed therein can trigger intelligent dialogues while running augmented-reality images.

When the application running on the user device activates the reality image interface and generates a reality image request to the server, the server receives the location information and the reality image request sent by the user device (step S301), and multiple visual ranges corresponding to multiple viewing angles for the location information can be calculated based on the location information (step S303). When the user device transmits current location information, a software program in the server can calculate multiple visual ranges at different viewing angles visible at a location of the user, and then request and calculate the multiple visual ranges based on the reality image to query the database (such as the map database described in FIG. 1) and obtain environment objects that can be seen in the images captured by the user device through a camera, such as buildings, landmarks, and scenic spots. Accordingly, location-based data within the visual ranges can be queried, and the spatial location that can be marked with the link icon of the location-based data and related text description of the link icon can be determined (step S305).

Then, query results of one or more pieces of location-based data within the visual range of different viewing angles are sent to the user device (step S307). In the reality image interface started by the user device, one or more link icons of one or more pieces of location-based data within the visual range are marked at corresponding spatial locations, and an intelligent dialogue link point is further provided.

It should be noted that, when the user device activates the reality image interface, the image displayed is the surrounding reality image captured by the camera of the user device. At this time, the server or the software program running in the user device can calculate the visual range based on the current location, that is, the location can indicate a height of the user device (such as the user device being located on a building or a mountain), and a shooting direction of the user device can reflect the viewing angle of the user device. At this time, the screen of the user device screen displays the visual range, and location information and reality image requests are generated and sent to the server. Accordingly, the server can determine the environment objects that can be seen in the visual range, and the server combines the reality image within the visual range captured through the camera of the user device and one or more link icons marked at one or more spatial locations to form an augmented-reality image.

When the user clicks on the intelligent dialogue link point displayed in the reality image interface, an intelligent dialogue interface can be started. At the same time, the server receives the generated intelligent dialogue request from the user device (step S309) and activates the intelligent dialogue program between the user device and the server (step S311). In this way, the chatbot is introduced in the intelligent dialogue program, and the location information and one or more location-based data within the visual range will be obtained at the same time, thereby allowing the user to conduct dialogue with the chatbot in the intelligent dialogue interface.

FIG. 4 is a flowchart of the method for triggering an intelligent dialogue through an augmented-reality image according to one embodiment in another display mode.

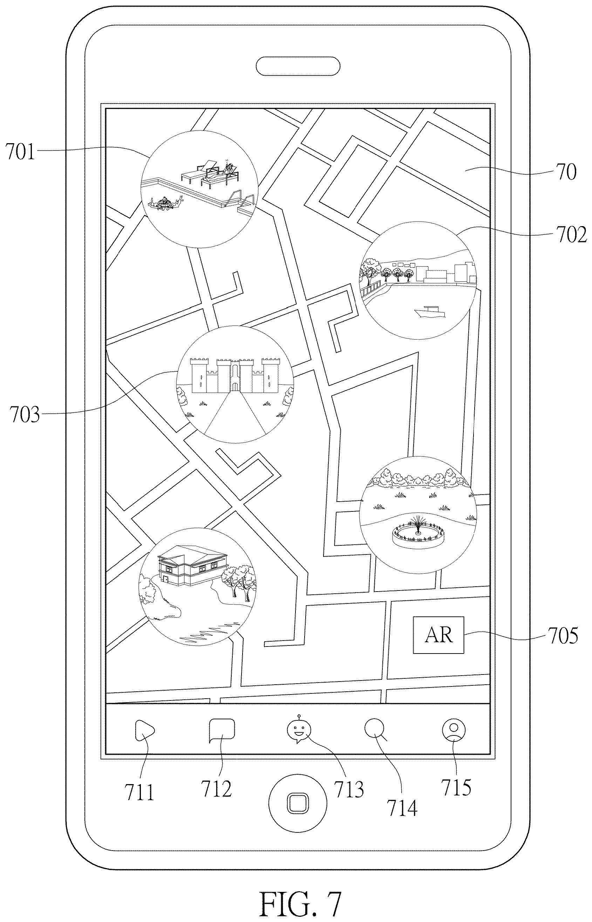

According to the embodiment as shown in the figure, the user operates a program executing in the user device to start a graphical user interface. As shown in FIG. 7, FIG. 7 is a schematic diagram of one embodiment of browsing location-based data on a map interface 70. In this example, a user interface with an electronic map as the background is displayed, and is used to browse the location-based data in different geographical ranges. The location-based data is such as audio-visual link points 701, 702, 703 marked at different locations shown in the figure. Certain functions provided by the software program are located at the bottom of the interface, and the functions are such as a playback function 711, a dialogue function 712, a helper function 713, a search function 714, and a return to user homepage function 715.

In the flowchart shown in FIG. 4, the server receives a signal from the user device indicating that the user has clicked one of points of interest (POI) (step S401), and the server queries the database based on the POI clicked by the user to obtain information on the POI such as audio-visual content, map data, and dialogue groups (step S403). At the same time, since the user clicks on one of the POIs, such as the audio-visual link points 701, 702, and 703 shown in FIG. 7, a browsing page that plays the text, pictures, or audio-visual data linked to this POI can be started. This browsing page displays location-based data; if an augmented-reality link point 705 (AR) is clicked, the user device activates the camera to capture surrounding images, thereby activating a reality image mode and activating the reality image interface. In the reality image mode, after the user device receives the query results obtained by the server querying the database, a link icon of the location-based data at the POI can be marked on one or more spatial locations in the reality image interface (step S405).

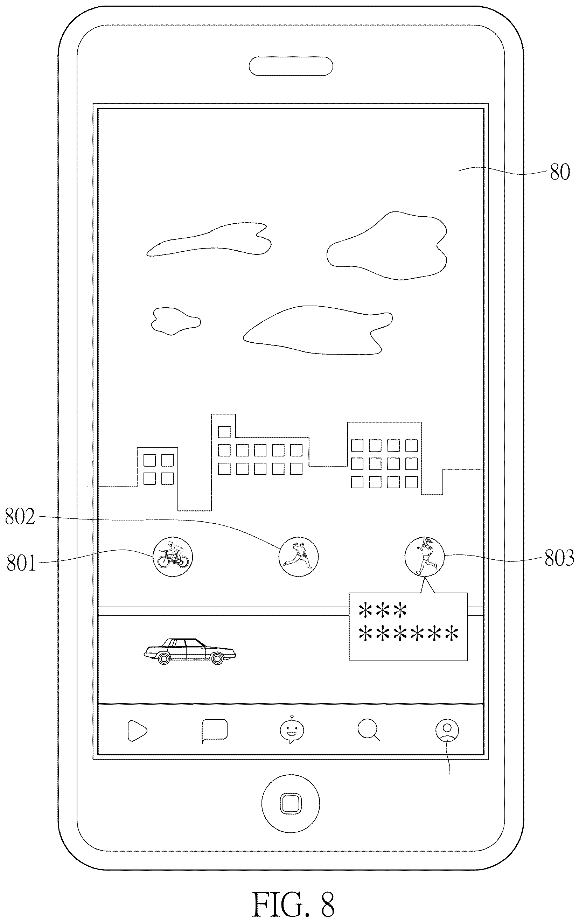

When the user device activates the reality image mode, as shown in FIG. 8, the user device captures surrounding images through a camera, such that an augmented-reality interface 80 of the reality image mode is displayed. In this augmented-reality interface 80, audio-visual link points 801, 802 are the corresponding link icons marked according to the spatial location of each piece of location-based data, and can include text descriptions. Through the link icons, the location-based data can be associated with one of the environment objects within the visual range. In this example, three link points are displayed at the bottom of the augmented-reality interface 80, and all three link points are thumbnails such as audio-visual link points 801, 802, and a dialogue link point 803 as shown in the figure.

After the user clicks the dialogue link point 803 in the augmented-reality interface 80, the intelligent dialogue program can be started. At this time, the server receives an intelligent dialogue request from the user device (step S407); that is, the intelligent dialogue program between the user device and the server is started (step S409). At this time, a chatbot is introduced into the intelligent dialogue interface launched by the user device, and the location information of the user device and one or more location-based data within the visual range are obtained at the same time to start the intelligent dialogue interface in the user device for dialogue.

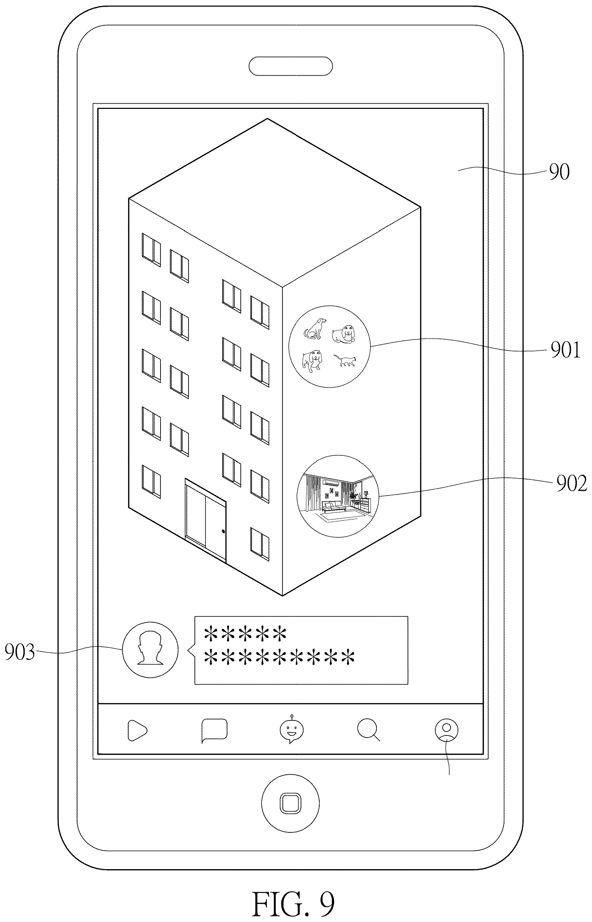

Reference is further made to an augmented-reality interface 90 shown in FIG. 9. In this embodiment, a building covering most of the screen within the visual range is captured by the camera of the user device. After calculation by the software program in the server, it is known that this environment object (i.e., the building) is present in the visual range formed by a certain viewing angle at the location of the user. Therefore, due to the limitation of the environment object, the link icon displayed through the augmented-reality interface 90 is such as the audio-visual link point 901 marked on the building. A dialogue link point 902 and a prompt text 903 for providing intelligent dialogue services are further provided.

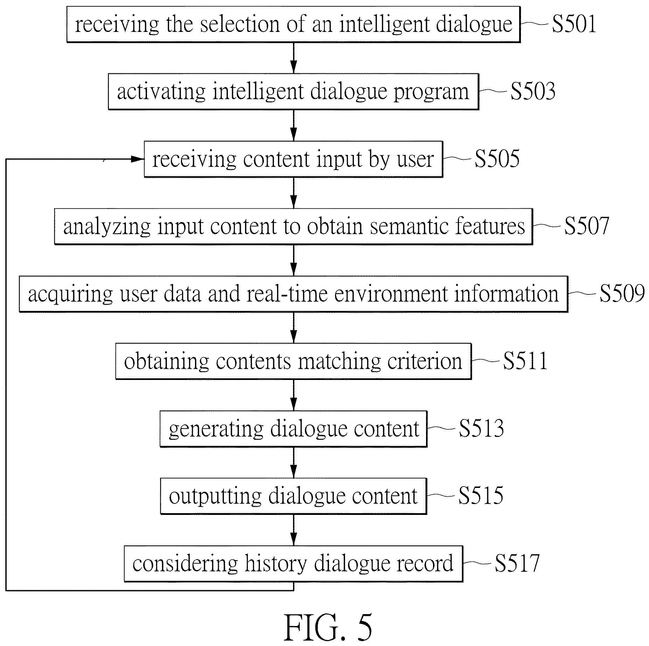

According to one embodiment, in the intelligent dialogue program, the chatbot executes the process of natural language message processing shown in FIG. 5.

When the user clicks on the dialogue link point (e.g., a dialogue link point 803 shown in FIG. 8) on the reality image interface, the cloud server receives the selecting of an intelligent dialogue (step S501) and activates the intelligent dialogue program (step S503). An intelligent dialogue interface is then started to allow the user to input text, pictures, or specific audio-visual contents through the intelligent dialogue interface (for example, inputting a link to share an audio-visual content), such that the cloud server receives a content input by the user through a user interface module (step S505). According to one embodiment, the intelligent dialogue program is implemented as a chatbot using a natural language model and is able to conduct dialogue with the user through an intelligent dialogue interface, and the chatbot executes natural language message processing for each content input by the user. The intelligent dialogue interface provides an input field for the user to input contents, and displays a dialogue display area for displaying a dialogue content output by the chatbot and the content input by the user.

At this time, the cloud server obtains the content input by the user through the user interface module. The content received through the dialogue interface can be text, voice, or audio-visual content. If the content is voice or audio-visual content, the content is converted into text via textualization, such that semantic analysis can be performed to obtain semantic features (step S507). During the execution of the above program, the cloud server obtains user data from the user database, and obtains real-time environment information from the external system (such as through the external system interface module 105 shown in FIG. 1) (step S509).

Afterwards, the content that matches the semantic features of the content input by the user, the user interests obtained from the user data, and the real-time environment information can be determined (or filtered after querying the database) (step S511), and be processed through the natural language model running in the intelligent dialogue program, such that a dialogue content is generated (step S513). Afterwards, the dialogue content is imported into the intelligent dialogue program and output on the dialogue interface (step S515). The above-mentioned steps S505 to S513 may be repeated in the process.

Furthermore, when the natural language model of the cloud server is in operation, the database or a system memory is used to record information of multiple aspects, which may include historical dialogue records under the same intelligent dialogue program. Accordingly, before the chatbot generates a dialogue as in step S511, in addition to considering the semantic features of the user, the user interests, and real-time environment information in the dialogue, historical dialogue records in this intelligent dialogue program can also be considered (step S517), such that the natural language model generates the dialogue content (step S515) that matches the current scenario.

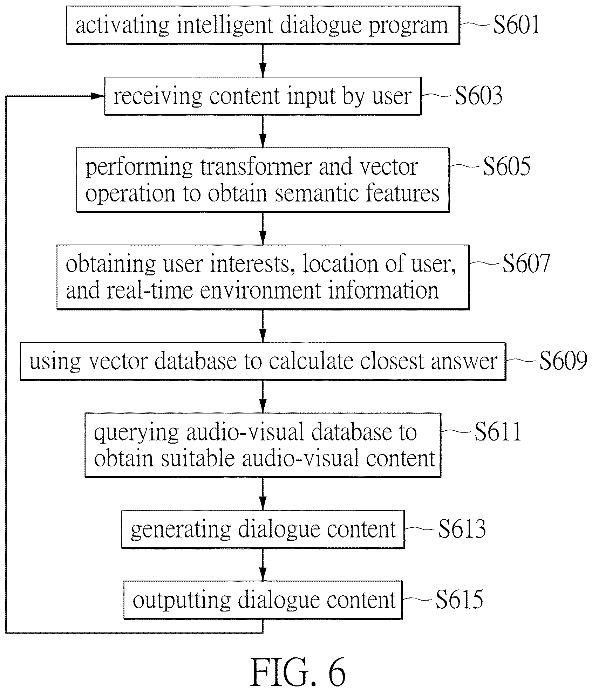

Reference is further made to FIG. 6, which is another flowchart of one embodiment of natural language message processing.

In the process shown in FIG. 6, the user activates the intelligent dialogue program through the application (step S601) and conducts dialogue with the chatbot, such that the system receives the dialogue content input by the user (step S603) to further obtain the semantic features of the user. According to one embodiment, the natural language processing module in the cloud server can be used to perform a transformer and a vector operation to obtain the semantic features (step S605).

It should be noted that natural language information processing can use artificial intelligence technology to learn natural language and achieve natural language understanding, and then perform text classification and grammatical analysis. When processing the dialogue content input by the user, a deep learning of a transformation model (as proposed by the Google^{™} Brain team in 2017) can be used to process the natural language content input by the user in a time sequence. If the content that is input is non-text, the content needs to be textualized first for the text to be obtained. In this way, in an online dialogue program, such transformer model can be used to perform machine translation, document summarization, document generation, etc.

After obtaining the semantic features of the dialogue content of the user, the system can use the user interests and a current location of the user obtained by the system, or parse a location of interest of the user from the dialogue content, and obtain real-time environment information from the external system based on the location (step S607). Here, the real-time environment information may include one or any combination of real-time weather, real-time traffic conditions, real-time news, and real-time network messages related to the location (such as POIs on maps, and POI reviews) obtained from one or more external systems.

Afterwards, the system will use a vector database to calculate the closest answer based on the semantic features of the user, user interests, and real-time environment information, and further based on historical dialogue records (step S609). It should be noted that the data in the vector database is structured information obtained using vector algorithms, which allows the system to obtain words having similar semantic meanings from the obtained content based on vector distances. For example, in the dialogue content, a vector distance between the word "computer" and the word "calculation" in the database is relatively close, while a vector distance between the word "computer" and the word "running" is farther.

In this embodiment, the vector algorithm can be executed on the content input by the user, the content the user is interested in, and real-time environment information, and further executed on the historical dialogue records according to requirements to mark the obtained text and calculate the vector of each word. Accordingly, relevant content can be obtained based on the vector distance between words to generate dialogue content that matches user interests and real-time environment information. Further, according to the embodiment, when the vector algorithm is executed on the historical dialogue records recorded in the cloud server, dialogue content that match a current emotion of the user can be generated. For example, the same topic in the historical dialogue records can be elaborated, and emotionally matching terms obtained from analysis can be used.

Furthermore, the system queries the audio-visual database based on the above information to obtain suitable audio-visual content, and a location of the user, environment objects, and location-based content displayed through the reality image interface are added to the content (step S611). The chatbot will use natural language processing and generative artificial intelligence technology to generate the dialogue content (step S613), and output the dialogue content on the dialogue interface (step S615). Moreover, in one embodiment, during the chat process, the system will continue the above steps, such that the chatbot can conduct dialogue with the user through natural language (via text or voice) and real-time contents (video, text, etc.) that interest the user.

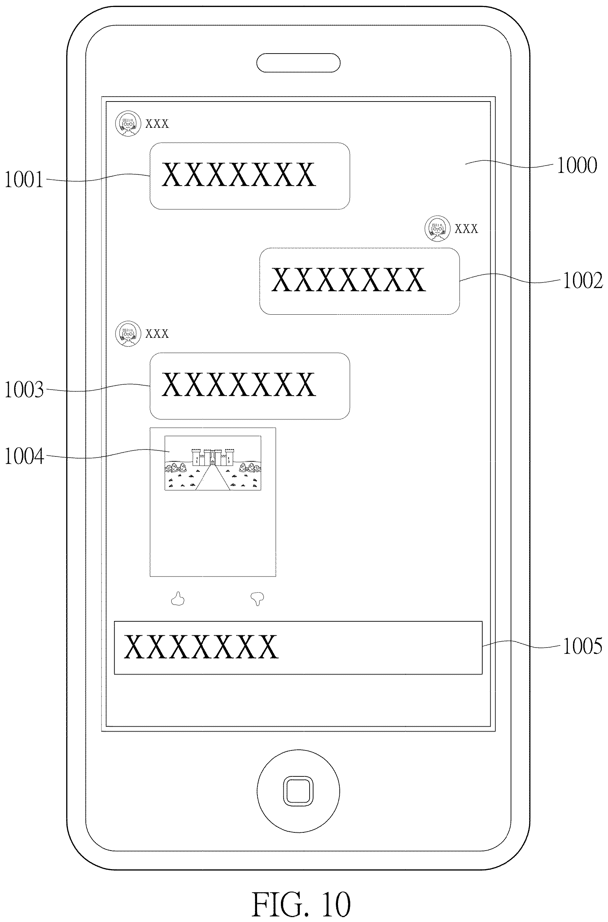

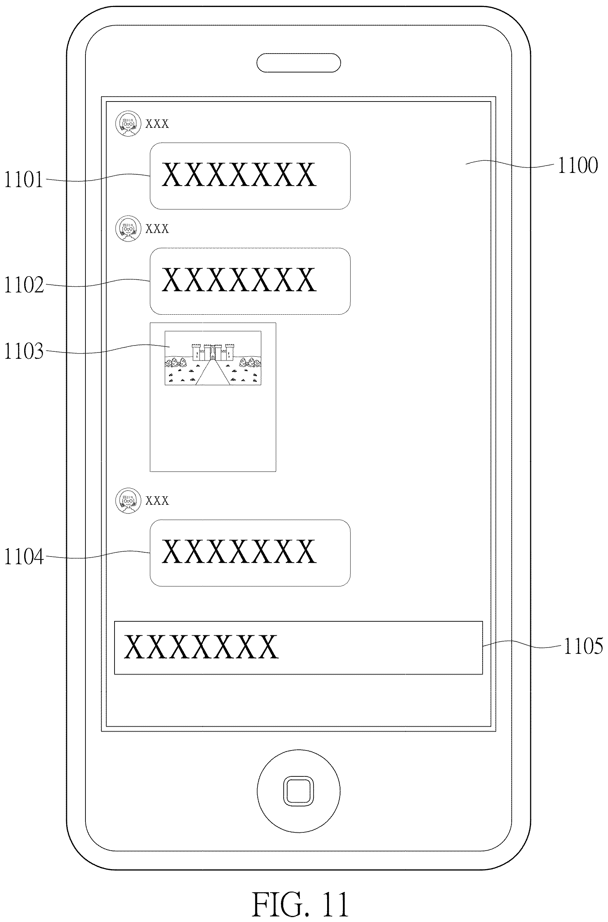

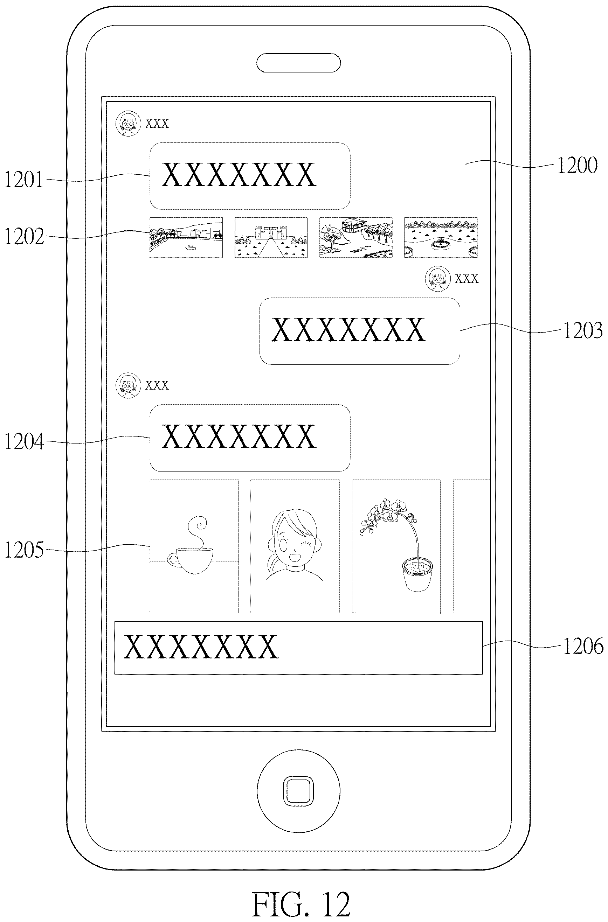

In the intelligent dialogue program, relevant embodiments may refer to a dialogue interface 1000 shown in FIG. 10, a dialogue interface 1100 shown in FIG. 11, and a dialogue interface 1200 shown in FIG. 12. The dialogue interface shown in each example provides input fields for the user to input content, and a dialogue display area for displaying a dialogue content output by the chatbot and a content input by the user.

Referring to FIG. 10 for relevant illustrations, FIG. 10 shows certain dialogue contents 1001, 1002, 1003 between the user and the chatbot in the dialogue interface 1000. The chatbot can also query the database based on the semantic features of the user obtained from the dialogue content 1002 to provide a recommended audio-visual content 1004. An input field 1005 is provided below the dialogue interface 1000 for the user to further input dialogue content.

Another mode is such as the dialogue interface 1100 as shown in FIG. 11. In this embodiment, when an online dialogue program is started, the system directly provides natural language dialogue contents 1101, 1102, 1104 based on the user interests and real-time information, and directly provides a recommended audio-visual content 1103. The user can then use an input field 1105 in the dialogue interface 1100 to respond to the dialogue content.

According to another embodiment, the dialogue content generated by the natural language model running in the chatbot based on the semantic features of the content input by the user, user interests, and real-time environment information may also provide multiple recommended options, multiple recommended audio-visual contents, and/or multiple recommended friend links as in the embodiment shown in FIG. 12.

In the online dialogue program, the dialogue interface 1200 shown in FIG. 12 includes a chatbot that generates a dialogue content 1201 based on the semantic features of the user. The semantic meanings in this example allow the chatbot to determine that the user is making a specific decision, and therefore provides certain recommended options 1202. Specifically, the chatbot provides recommended options to the user based on real-time environment information obtained by the system from external systems. For example, the chatbot can provide the recommended options 1202 based on a real-time climate, a traffic condition, a time, and a location of the user. If the time coincides with meal time and the eating habit of the user is taken into consideration, the chatbot can provide meal options available at nearby open restaurants based on the location of the user.

Correspondingly, if the user expresses a desire to watch an audio-visual content, the recommended options 1202 may be multiple recommended audio-visual contents; if the user expresses a desire to find friends having similar interests, the recommended options 1202 may be multiple recommended friend links.

In addition, the user then uses an input field 1206 to respond to the recommended options 1202 and inputs a dialogue content 1203, such that the chatbot responds with a dialogue content 1204 according to the semantic meanings of the dialogue content 1203, and provides multiple recommended contents 1205 based on the semantic meanings of the above dialogue content. As shown in the aforementioned example, when the user responds with the desire for one of the meals, the chatbot can provide restaurant options corresponding to the meal that the user desires to eat based on the real-time weather, the traffic conditions, and the location of the user obtained by the system from the external system. If weather conditions are poor and there are traffic jams on certain roads, restaurant options that are easily accessible to the user are recommended accordingly.

The foregoing description of the exemplary embodiments of the invention has been presented only for the purposes of illustration and description and is not intended to be exhaustive or to limit the invention to the precise forms disclosed. Many modifications and variations are possible in light of the above teaching.

The embodiments were chosen and described in order to explain the principles of the invention and their practical application so as to enable others skilled in the art to utilize the invention and various embodiments and with various modifications as are suited to the particular use contemplated. Alternative embodiments will become apparent to those skilled in the art to which the present invention pertains without departing from its spirit and scope.

## Claims

1. A method for triggering an intelligent dialogue through an augmented-reality image, executed in a server, and the method being **characterized by** comprising:
receiving location information and a reality image request sent by a user device (150);
calculating, based on the location information, multiple visual ranges corresponding to multiple viewing angles for the location information;
querying a database based on the reality image request and the calculated multiple visual ranges to obtain one or more pieces of location-based data;
sending link information of the one or more pieces of location-based data within each of the multiple visual ranges to the user device (150), wherein the user device (150) initiates a reality image interface (115), marks one or more link icons linking the one or more pieces of location-based data in the reality image interface (115) based on respective spatial locations of the one or more pieces of location-based data within each of the multiple visual ranges, and provides an intelligent dialogue link point;
receiving from the user device (150) an intelligent dialogue request generated from the intelligent dialogue link point displayed on the reality image interface (115) being triggered to start an intelligent dialogue program; and
introducing a chatbot in the intelligent dialogue program, wherein the location information and the one or more pieces of location-based data within each of the multiple visual ranges are obtained at a same time, and an intelligent dialogue interface is started in the user device (150) for dialogue.

2. The method according to claim 1, wherein the reality image interface (115) displays a reality image of each of the multiple visual ranges captured by the user device (150) using a camera, and the reality image is combined with the one or more link icons marked in the one or more spatial locations to form an augmented-reality image.

3. The method according to claim 2, wherein, in the reality image interface (115), a corresponding one of the link icons and a text description are marked in the spatial location of each piece of location-based data, and the location-based data linked by the link icon and one of environment objects within each of the multiple visual ranges have a correlation.

4. The method according to claim 3, wherein, in the intelligent dialogue program, the chatbot generates a location-based dialogue content related to a location of the user device (150) based on the one or more pieces of location-based data within each of the multiple visual ranges and one or more identified ones of the environment objects.

5. The method according to any one of claims 1 to 5, wherein, in the intelligent dialogue program, the following processes are performed by the chatbot:
receiving content input through the intelligent dialogue interface by a user;
obtaining semantic features of the content input by the user;
obtaining user data (23) and real-time environment information;
running a natural language model to generate a dialogue content (1001) based on the semantic features of the content input by the user, user interests obtained from the user data (23), and a content of the real-time environment information, and by referring to the one or more pieces of location-based data within each of the multiple visual ranges; and
introducing the dialogue content (1001) into the intelligent dialogue program, and outputting the dialogue content (1001) in the intelligent dialogue interface;
wherein the content received through the intelligent dialogue interface is a text, a voice, or an audio-visual content, and wherein, when the content that is received is the voice or the audio-visual content, the content is converted into another text through a textualization process and then undergoes semantic analysis so that the semantic features of the another text is obtained; wherein the natural language model running in the server uses a transformer model to perform processes of machine translation, document summarization, and document generation to generate the dialogue content (1001).

6. A system for triggering an intelligent dialogue through an augmented-reality image, and the system being **characterized by** comprising:
a server including a database, wherein the server executes a method for triggering the intelligent dialogue through the augmented-reality image, the method including:
receiving location information and a reality image request sent by a user device (150);
calculating, based on the location information, multiple visual ranges corresponding to multiple viewing angles for the location information;
querying a database based on the reality image request and the calculated multiple visual ranges to obtain one or more pieces of location-based data;
sending link information of the one or more pieces of location-based data within each of the multiple visual ranges to the user device (150), wherein the user device (150) initiates a reality image interface (115), marks one or more link icons linking the one or more pieces of location-based data in the reality image interface (115) based on respective spatial locations of the one or more pieces of location-based data within each of the multiple visual ranges, and provides an intelligent dialogue link point;
receiving from the user device (150) an intelligent dialogue request generated from the intelligent dialogue link point displayed on the reality image interface (115) being triggered to start an intelligent dialogue program; and
introducing a chatbot in the intelligent dialogue program, wherein the location information and the one or more pieces of location-based data within each of the multiple visual ranges are obtained at a same time, and an intelligent dialogue interface is started in the user device (150) for dialogue.

7. The system according to claim 6, wherein the reality image interface (115) displays a reality image of each of the multiple visual ranges captured by the user device (150) using a camera, and the reality image is combined with the one or more link icons marked in the one or more spatial locations to form an augmented-reality image; and wherein a corresponding one of the link icons and a text description are marked in the spatial location of each piece of location-based data, and the location-based data linked by the link icon and one of environment objects within each of the multiple visual ranges have a correlation.

8. The system according to claim 7, wherein, by querying map data and audio-visual data in the database, one or more of the environment objects within each of the multiple visual ranges and a corresponding one of the one or more pieces of location-based data of each of the environment objects are obtained, so that the link icons and the text description are accurately marked in the spatial location of each of the one or more pieces of location-based data.

9. The system according to claim 8, wherein, in the intelligent dialogue program, the chatbot generates a location-based dialogue content related to a location of the user device (150) based on the one or more pieces of location-based data within each of the multiple visual ranges and one or more identified ones of the environment objects.

10. The system according to claim 9, wherein the server provides an external system interface for connecting to one or more external systems to obtain real-time environment information, so that the chatbot further generates the location-based dialogue content based on the real-time environment information.

11. The system according to any one of claims 6 to 10, wherein, in the intelligent dialogue program, the following processes are performed by the chatbot:
receiving content input through the intelligent dialogue interface by a user;
obtaining semantic features of the content input by the user;
obtaining user data (23) and real-time environment information;
running a natural language model to generate a dialogue content (1001) based on the semantic features of the content input by the user, user interests obtained from the user data (23), and a content of the real-time environment information, and by referring to the one or more pieces of location-based data within each of the multiple visual ranges; and
introducing the dialogue content (1001) into the intelligent dialogue program, and outputting the dialogue content (1001) in the intelligent dialogue interface.

12. The system according to claim 11, wherein the content received through the intelligent dialogue interface is a text, a voice, or an audio-visual content, and wherein, when the content that is received is the voice or the audio-visual content, the content is converted into another text through a textualization process and then undergoes semantic analysis so that the semantic features of the another text is obtained.

13. The system according to claim 11, wherein the natural language model running in the server uses a transformer model to perform processes of machine translation, document summarization, and document generation to generate the dialogue content (1001).

14. The system according to claim 13, wherein, in the server, a vector algorithm is executed on the content input by the user, the user interests, the real-time environment information, and the one or more pieces of location-based data within each of the multiple visual ranges to mark the text that is obtained, calculate a vector of each of words, and obtain relevant content based on a vector distance between each of the words, and generate the dialogue content (1001) matching the user interests and the real-time environment information.

15. The system according to claim 11, wherein the dialogue content (1001) generated by the natural language model running in the chatbot based on the semantic features of the content input by the user, the user interests, the real-time environment information, and the one or more pieces of location-based data within each of the multiple visual ranges includes providing multiple recommended options (1202), multiple recommended audio-visual contents (1004), and/or multiple recommended friend links.
